# EUROPEAN PATENT APPLICATION

(11) **EP 4 668 516 A1**
(43) Date of publication of application: **24.12.2025**
(21) Application number: 23926051.6
(22) Date of filing: 27.11.2023
(51) Int. Cl.: H02H 9/02, H02J 7/00

(54) **POWER SUPPLY SURGE PROTECTION APPARATUS AND PROTECTION SYSTEM**

(30) Priority: 07.03.2023 CN 202310219895
(71) Applicant: CRSC Research & Design Institute Group Co., Ltd., Beijing 100070 (CN)
(72) Inventor: LI, Zhiyu, Beijing 100070 (CN); NIU, Jiangtao, Beijing 100070 (CN); CAO, Hefei, Beijing 100070 (CN); MENG, Tianxu, Beijing 100070 (CN); CUI, Junfeng, Beijing 100070 (CN); JIA, Yunguang, Beijing 100070 (CN)
(74) Representative: Haseltine Lake Kempner LLP
(86) International application number: PCT/CN2023/134370
(87) International publication number: WO 2024/183357

(57) **Abstract**

Disclosed in the present invention are a power supply surge protection apparatus and protection system. The protection apparatus comprises a first transient inrush current absorption module and a second transient inrush current absorption module; the first transient inrush current absorption module is electrically connected between a positive electrode end of a power supply and a positive electrode end of an electrical system; the first transient inrush current absorption module is used for absorbing a transient surge current between the positive electrode end of the power supply and the positive electrode end of the electrical system; the second transient inrush current absorption module is electrically connected between a negative electrode end of the power supply and a negative electrode end of the electrical system; and the second transient inrush current absorption module is used for absorbing a transient surge current between the negative electrode end of the power supply and the negative electrode end of the electrical system. The technical solutions of the present invention can reduce an inrush current of 100A or above to 2A or below at a turning-on instant of an ATO power supply module, thus avoiding irreversible shock damage to storage batteries while ensuring no effect on normal operation of the whole system.

## Description

### TECHNICAL FIELD

The present invention relates to the technical field of surge protection, particularly to a power surge protection device and protection system.

### BACKGROUND

A surge protector, also known as a surge arrester, is an electronic device designed to provide safety protection for various electronic equipment, instruments, and communication lines. When a sudden spike in current or voltage occurs in an electrical circuit or communication line due to external interference, the surge protector can be turned on to divert the surge in an extremely short time, thereby preventing damage by the surge to other devices in the circuit.

Currently, a power module of the Automatic Train Operation (ATO) system is equipped with a capacitor that provides power failure protection. The capacitor is charged at the moment of the storage battery being turned on, resulting in a large current with a sudden peak value of over 100A. The amplitude of this current is too large and may cause irreversible impact and damage to the storage battery. Existing surge protectors cannot reduce the impact current under such circumstances while ensuring the normal operation of the system.

### SUMMARY

The present invention provides a power surge protection device and protection system to address the shortcoming of the related art, achieving a reduction of the impact current from over 100A to below 2A at the moment of power-on of the ATO power module. This prevents the storage battery being subject to the irreversible impact and damage while ensuring no impact on the normal operation of the entire system.

In a first aspect, the present invention provides a power surge protection device including: a first transient inrush current absorption module and a second transient inrush current absorption module;
the first transient inrush current absorption module is electrically connected between a positive terminal of a power supply and a positive terminal of a power consumption system; the first transient inrush current absorption module is used to absorb a transient surge current between the positive terminal of the power supply and the positive terminal of the power consumption system;
the second transient inrush current absorption module is electrically connected between a negative terminal of the power supply and a negative terminal of the power consumption system; the second transient inrush current absorption module is used to absorb a transient surge current between the negative terminal of the power supply and the negative terminal of the power consumption system.

Alternatively, the first transient inrush current absorption module comprises at least: a first thermistor and a first resistor connected in series.

Alternatively, one end of the first thermistor is electrically connected to the positive terminal of the power supply, the other end of the first thermistor is electrically connected to one end of the first resistor, and the other end of the first resistor is electrically connected to the positive terminal of the power consumption system.

Alternatively, one end of the first thermistor is electrically connected to the positive terminal of the power consumption system, and the other end of the first thermistor is electrically connected to one end of the first resistor; the other end of the first resistor is electrically connected to the positive terminal of the power supply.

Alternatively, the second transient inrush current absorption module comprises at least: a second thermistor;
one end of the second thermistor is electrically connected to the negative terminal of the power supply, and the other end of the second thermistor is electrically connected to the negative terminal of the power consumption system.

Alternatively, the first resistor is a variable resistor.

Alternatively, the power surge protection device is characterized in that it further comprises: a printed circuit board;
the first transient inrush current absorption module and the second transient inrush current absorption module are mounted on the printed circuit board.

Alternatively, the power supply surge protection device is characterized in that it further comprises: a metal housing;
the printed circuit board is fixed within the metal housing.

Alternatively, the metal housing is provided with at least one heat dissipation hole.

In a second aspect, the present invention also provides a power surge protection system including: a power supply, a power consumption system, and the power surge protection device described in any one of the above;
the power surge protection device is electrically connected between the power supply and the power consumption system.

According to the technical solution of the present invention, by electrically connecting the first transient inrush current absorption module between the positive terminal of the power supply and the positive terminal of the power consumption system, and electrically connecting the second transient inrush current absorption module between the negative terminal of the power supply and the negative terminal of the power consumption system, the first transient inrush current absorption module is used to absorb the transient surge current between the positive terminal of the power supply and the positive terminal of the power consumption system, and the second transient inrush current absorption module is used to absorb the transient surge current between the negative terminal of the power supply and the negative terminal of the power consumption system. Thus, at the moment of the power consumption system being turned on, the first transient inrush current absorption module absorbs the transient surge current between the positive terminal of the power supply and the positive terminal of the power consumption system, while simultaneously the second transient inrush current absorption module absorbs the transient surge current between the negative terminal of the power supply and the negative terminal of the power consumption system, thereby preventing irreversible impact and damage to the storage battery while ensuring that the normal operation of the entire system is not affected at all.

It should be understood that the content described in this section is not intended to identify the key or important features of the embodiments of the present invention, nor is it intended to limit the scope of the present invention. Other features of the present invention will be readily understood from the following description.

### BRIEF DESCRIPTION OF DRAWINGS

To more clearly illustrate the technical solutions in the embodiments of the present invention, the following is a brief introduction to the figures used in the description of the embodiments. It is evident that the figures described below are merely some embodiments of the present invention. For those skilled in the art, other figures can be obtained based on these figures without any creative labor.
FIG. 1 is a structural schematic diagram of a power surge protection device provided by an embodiment of the present invention;
FIG. 2 is a structural block diagram of a power surge protection system provided by an embodiment of the present invention.

### DETAILED DESCRIPTION

To help those skilled in the art better understand the present invention, the technical solutions in the embodiments of the present invention will be described clearly and completely below with reference to the accompanying drawings in the embodiments of the present invention. It should be noted that the described embodiments are merely a part of embodiments of the present invention instead of all possible embodiments. All other embodiments obtained by those skilled in the art without making any creative labor based on the embodiments of the present invention should fall within the scope of protection of the present invention.

It should be noted that the terms "first", "second", etc., used in the specification, claims, and the above drawings are used to distinguish similar objects and are not intended to describe a specific order or sequence. It should be understood that such data may be interchanged as appropriate so that the embodiments of the present invention described herein may be implemented in an order other than those illustrated or described herein. Furthermore, the terms "comprise", "have" and any variations thereof are intended to cover a non-exclusive inclusion, such as a process, method, system, product, or device comprising a series of steps or units that need not be limited to those steps and units clearly listed, but may comprise other steps or units not clearly listed or inherent to the process, method, product, or device.

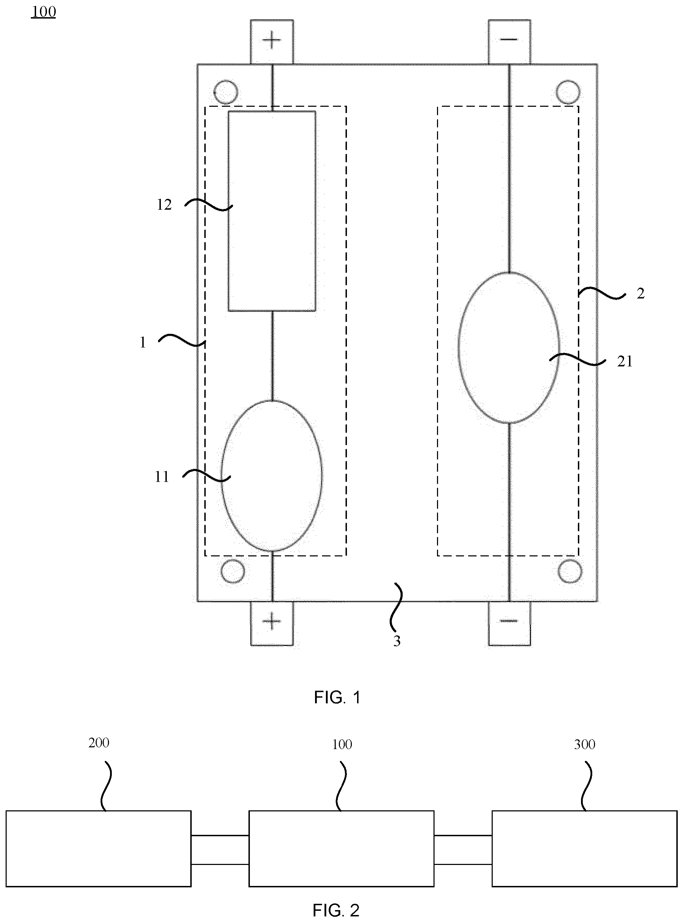

The embodiment of the present invention provides a power surge protection device. FIG. 1 is a structural schematic diagram of a power surge protection device provided by the embodiment of the present invention. Referring to FIG. 1, the power surge protection device 100 comprises a first transient inrush current absorption module 1 and a second transient inrush current absorption module 2; the first transient inrush current absorption module 1 is electrically connected between a positive terminal of a power supply (not shown in FIG. 1) and a positive terminal of a power consumption system (not shown in FIG. 1); the first transient inrush current absorption module 1 is used to absorb a transient surge current between the positive terminal of the power supply and the positive terminal of the power consumption system; the second transient inrush current absorption module 2 is electrically connected between a negative terminal of the power supply and a negative terminal of the power consumption system; the second transient inrush current absorption module 2 is used to absorb a transient surge current between the negative terminal of the power supply and the negative terminal of the power consumption system.

Wherein, both the first transient inrush current absorption module 1 and the second transient inrush current absorption module 2 may comprise a negative temperature coefficient (NTC) thermistor, which is a sensor resistor whose resistance value decreases as temperature increases; wherein, the first transient inrush current absorption module 1 is connected between the positive terminal of the power supply and the positive terminal of the power consumption system, and is used to absorb the transient surge current between the positive terminal of the power supply and the positive terminal of the power consumption system; the second transient inrush current absorption module 2 is connected between the negative terminal of the power supply and the negative terminal of the power consumption system, and is used to absorb the transient surge current between the negative terminal of the power supply and the negative terminal of the power consumption system. The power supply may comprise, but is not limited to, a storage battery, and the power consumption system may comprise, but is not limited to, a capacitor that provides power failure protection for the system, for example, the power consumption system may be a train automatic operation system; when the power supply is directly electrically connected to the power consumption system, at the moment of the power consumption system being turned on, the power supply first charges the capacitor providing power failure protection for the system. As a result, the power supply is subjected to a transient surge current with a peak value exceeding 100A, which may cause irreversible damage to the power supply.

Specifically, the first transient inrush current absorption module 1 is connected between the positive terminal of the power supply and the positive terminal of the power consumption system, and the second transient inrush current absorption module 2 is connected between the negative terminal of the power supply and the negative terminal of the power consumption system. Thus, when the power supply charges the capacitor providing power failure protection for the system at the moment of the power consumption system being turned on, the first transient inrush current absorption module 1 absorbs the transient surge current between the positive terminal of the power supply and the positive terminal of the power consumption system, and the second transient inrush current absorption module 2 absorbs the transient surge current between the negative terminal of the power supply and the negative terminal of the power consumption system, thereby protecting the power supply from the impact of transient surge current.

In this embodiment, the first transient inrush current absorption module is electrically connected between the positive terminal of the power supply and the positive terminal of the power consumption system, and the second transient inrush current absorption module is electrically connected between the negative terminal of the power supply and the negative terminal of the power consumption system, so the first transient inrush current absorption module is used to absorb the transient surge current between the positive terminal of the power supply and the positive terminal of the power consumption system, and the second transient inrush current absorption module is used to absorb the transient surge current between the negative terminal of the power supply and the negative terminal of the power consumption system. Thus, at the moment of the power consumption system being turned on, the first transient inrush current absorption module absorbs the transient surge current between the positive terminal of the power supply and the positive terminal of the power consumption system, and the second transient inrush current absorption module simultaneously absorbs the transient surge current between the negative terminal of the power supply and the negative terminal of the power consumption system, thereby preventing the storage battery from being impacted and damaged by the transient surge current while ensuring that the normal operation of the entire system is not affected at all.

Alternatively, further with reference to FIG. 1, the first transient inrush current absorption module 1 comprises at least a first thermistor 11 and a first resistor 12 connected in series.

Wherein, the first thermistor 11 may be a negative temperature coefficient thermistor, whose resistance value decreases as temperature increases. The first resistor 12 may be a fixed-value resistor or a variable resistor, connected in series between the positive terminal of the power supply and the positive terminal of the power consumption system, serving to divide the voltage and further limit the current amplitude between the positive terminal of the power supply and the positive terminal of the power consumption system, preventing excessive current in the circuit from damaging components therein, wherein the resistance value of the first resistor 12 may be determined experimentally based on the requirements of the power supply and power consumption system. In an exemplary embodiment, the first resistor 12 may be a fixed-value resistor with a resistance value of 10Ω.

Specifically, the first thermistor 11 and the first resistor 12 connected in series are connected between the positive terminal of the power supply and the positive terminal of the power consumption system. When the power supply charges the capacitor that provides power failure protection for the system at the moment of the power consumption system being turned on, since at this time the temperature of the first thermistor 11 is low and its resistance value is high, the current in the circuit may be limited, preventing the current from damaging the power supply; after the power consumption system is normally powered on, due to the continuous effect of the current, the temperature of the first thermistor 11 rises, its resistance value decreases, and its voltage division decreases. Therefore, after the power consumption system is normally powered on, the first thermistor 11 does not affect the normal operation of the system.

It should be noted that in this embodiment, the first thermistor 11 may be connected to the positive terminal of the power supply, and the first resistor 12 may be connected to the positive terminal of the power consumption system. Alternatively, the first resistor 12 may be connected to the positive terminal of the power consumption system, and the first thermistor 11 may be connected to the positive terminal of the power supply. In other words, this embodiment does not limit the input and output terminals of the protective device, as long as the first transient inrush current absorption module 1 is connected to the positive terminal of the power supply and the positive terminal of the power consumption system.

In an alternative embodiment, one end of the first thermistor 11 is electrically connected to the positive terminal of the power supply, the other end of the first thermistor 11 is electrically connected to one end of the first resistor 12, and the other end of the first resistor 12 is electrically connected to the positive terminal of the power consumption system.

In another alternative embodiment, one end of the first thermistor 11 is electrically connected to the positive terminal of the power consumption system, and the other end of the first thermistor 11 is electrically connected to one end of the first resistor 12; the other end of the first resistor 12 is electrically connected to the positive terminal of the power supply.

Alternatively, the second transient inrush current absorption module 2 comprises at least a second thermistor 21; one end of the second thermistor 21 is electrically connected to the negative terminal of the power supply, and the other end of the second thermistor 21 is electrically connected to the negative terminal of the power consumption system.

Wherein, the second thermistor 21 may be a negative temperature coefficient thermistor, whose resistance value decreases as temperature increases.

Specifically, the second thermistor 21 is connected between the negative terminal of the power supply and the negative terminal of the power consumption system. When the power supply charges the capacitor that provides power failure protection for the system at the moment of the power consumption system being turned on, since at this time the temperature of the second thermistor 21 is low and its resistance value is high, the current in the circuit may be limited, preventing the current from damaging the power supply; after the power consumption system is normally powered on, due to the continuous effect of the current, the temperature of the second thermistor 21 rises, its resistance value decreases, and its voltage division decreases. Therefore, after the power consumption system is normally powered on, the second thermistor 21 does not affect the normal operation of the system.

Alternatively, the power surge protection device provided in this embodiment further comprises: a printed circuit board 3; the first transient inrush current absorption module 1 and the second transient inrush current absorption module 2 are mounted on the printed circuit board 3.

Wherein, the printed circuit board 3 serves as a carrier for electrically connecting electronic components. The first transient inrush current absorption module 1 and the second transient inrush current absorption module 2 may be assembled on the printed circuit board 3, thereby simplifying the connection of electronic components within the first transient inrush current absorption module 1 and the second transient inrush current absorption module 2.

Alternatively, the power surge protection device provided in this embodiment further comprises a metal housing (not shown in FIG. 1); the printed circuit board 3 is fixed within the metal housing to protect the printed circuit board 3 and the first transient inrush current absorption module 1 and second transient inrush current absorption module 2 mounted on the printed circuit board 3, preventing damage to the protection device due to external forces during use. Wherein, the printed circuit board 3 may be fixed within the metal housing by mounting screws or in a way of welding. It should be noted that this embodiment does not impose any restrictions on the specific material of the metal housing, as long as it may achieve the protection of the printed circuit board 3 and the first transient inrush current absorption module 1 and the second transient inrush current absorption module 2 mounted on the printed circuit board 3.

Alternatively, the metal housing is provided with at least one heat dissipation hole to enable the first transient inrush current absorption module 1 and the second transient inrush current absorption module 2 to dissipate heat promptly during operation, thereby preventing components from overheating and being damaged during operation. Wherein, the number of heat dissipation holes may be set according to requirements, and their positions may also be set as needed. In an exemplary embodiment, the heat dissipation holes may be set on both sides of the metal housing. In other embodiments, the heat dissipation holes may also be set on the upper surface of the metal housing. This embodiment does not impose any restrictions on the positions of the heat dissipation holes.

Based on the same inventive concept, FIG. 2 is a structural block diagram of a power surge protection system provided by an embodiment of the present invention. Referring to FIG. 2, the present embodiment also provides a power surge protection system including a power supply 200, a power consumption system 100, and the power surge protection device 100 provided by any of the above embodiments; the power surge protection device 100 is electrically connected between the power supply 200 and the power consumption system 300.

The power surge protection system provided by the present invention comprises the power surge protection device provided by any of the embodiments of the present invention, and can achieve the beneficial effects of the power surge protection device provided by any of the embodiments of the present invention. Similarities may be referred to the above description.

The above specific embodiments do not constitute a limitation on the scope of protection of the present invention. Those skilled in the art should understand that various modifications, combinations, subcombinations, and substitutions may be made according to design requirements and other factors. Any modifications, equivalent replacements, and improvements made within the spirit and principles of the present invention should be included within the scope of protection of the present invention.

This application claims priority to Chinese Patent Application No. 202310219895.7 filed on March 7, 2023, and the full text of the Chinese Patent Application is incorporated herein by reference as part of this application.

## Claims

1. A power surge protection device, **characterized in that** it comprises: a first transient inrush current absorption module and a second transient inrush current absorption module;
the first transient inrush current absorption module is electrically connected between a positive terminal of a power supply and a positive terminal of a power consumption system; the first transient inrush current absorption module is used to absorb a transient surge current between the positive terminal of the power supply and the positive terminal of the power consumption system;
the second transient inrush current absorption module is electrically connected between a negative terminal of the power supply and a negative terminal of the power consumption system; the second transient inrush current absorption module is used to absorb a transient surge current between the negative terminal of the power supply and the negative terminal of the power consumption system.

2. The power surge protection device according to claim 1, **characterized in that** the first transient inrush current absorption module comprises at least: a first thermistor and a first resistor connected in series.

3. The power supply surge protection device according to claim 2, **characterized in that** one end of the first thermistor is electrically connected to the positive terminal of the power supply, other end of the first thermistor is electrically connected to one end of the first resistor, and other end of the first resistor is electrically connected to the positive terminal of the power consumption system.

4. The power surge protection device according to claim 2, **characterized in that** one end of the first thermistor is electrically connected to the positive terminal of the power system, other end of the first thermistor is electrically connected to one end of the first resistor, and other end of the first resistor is electrically connected to the positive terminal of the power supply.

5. The power surge protection device according to claim 1, **characterized in that** the second transient inrush current absorption module comprises at least: a second thermistor;
one end of the second thermistor is electrically connected to the negative terminal of the power supply, and other end of the second thermistor is electrically connected to the negative terminal of the power consumption system.

6. The power surge protection device according to claim 1, **characterized in that** the first resistor is a variable resistor.

7. The power surge protection device according to claim 1, **characterized in that** it further comprises: a printed circuit board;
the first transient inrush current absorption module and the second transient inrush current absorption module are mounted on the printed circuit board.

8. The power surge protection device according to claim 1, **characterized in that** it further comprises: a metal housing;
the printed circuit board is fixed within the metal housing.

9. The power surge protection device according to claim 8, **characterized in that** the metal housing is provided with at least one heat dissipation hole.

10. A power surge protection system, **characterized in that** it comprises: a power supply, a power consumption system, and the power surge protection device according to any one of claims 1-9;
the power surge protection device is electrically connected between the power supply and the power consumption system.
